(19) Europäisches Patentamt

European Patent Office

Office européen des brevets

(11) Veröffentlichungsnummer: **0 625 400 A1**

## (12) EUROPÄISCHE PATENTANMELDUNG

(21) Anmeldenummer: 93113286.4

(22) Anmeldetag: **19.08.93**

(51) Int. Cl.5: **B23G 5/06**

(30) Priorität: **04.05.93 EP 93107217**

(43) Veröffentlichungstag der Anmeldung:
**23.11.94 Patentblatt 94/47**

(84) Benannte Vertragsstaaten:
**AT BE CH DE DK ES FR GB GR IE IT LI LU MC NL PT SE**

(71) Anmelder: **LUDWIG HETTICH SCHRAUBENFABRIK GmbH & Co.**
**Dr. Kurt-Steim-Strasse 28**
**D-78713 Schramberg-Sulgen (DE)**

(72) Erfinder: **Hettich, Stefan**
**Haldenhof 18**
**D-78713 Schramberg (DE)**
Erfinder: **Hettich, Ulrich**
**Hauptstrasse 11**
**D-78737 Ffluorn-Winzeln (DE)**

(74) Vertreter: **Liesegang, Roland, Dr.-Ing.**
**FORRESTER & BOEHMERT**
**Franz-Joseph-Strasse 38**
**D-80801 München (DE)**

(54) **Werkzeug zum Erzeugen eines Innengewindes.**

(57) Ein Werkzeug zum Erzeugen eines Innengewindes in Beton, Gestein oder dgl. hat einen Einspannteil (1), einen Schaftteil (2), einen Führungsteil (3) mit darauf angeordnetem Gewinde (4), einen Gewindeausschnitteil (5), der schwach konisch ausgebildet ist und sich über den Rest der Werkzeuglänge erstreckt und über den sich das Gewinde (4) fortsetzt. Das Verhältnis von Außendurchmesser ($d_a$) zum Kerndurchmesser ($d_K$) des Führungsteils beträgt etwa 1,25 bis 1,5 und das Verhältnis von Außendurchmesser ($d_a$) zu Steigung (p) des Gewindes (4) etwa 1,5 bis 1.6. Das Gewinde (4) ist mit Schneidezähnen versehen.

Fig. 1

Die Erfindung betrifft ein Werkzeug zum Erzeugen eines Innengewindes in Beton, Mauerwert oder dgl.

Zum Verankern einer Schraube oder dgl. in Beton bohrt man bisher ein Loch vor, in das ein Dübel oder Anker eingesetzt wird, in welchen dann eine Schraube eingeschraubt wird.

Zum Befestigen von Teilen an Beton oder Mauerwerk wäre wünschenswert, wenn in Löchern in dem Beton oder Mauerwerk ein Gewinde vorgeschnitten werden und in das vorgebohrte Gewindeloch direkt ohne Zwischenschaltung eines Dübels eine passende Schraube eingeschraubt werden könnte.

Dem steht bisher entgegen, daß man ein Gewindeschneiden im Beton aufgrund dessen Sprödigkeit, die leicht zu einem Ausbrechen bei einer Bearbeitung führt, für unmöglich gehalten hat.

Der Erfindung liegt die Aufgabe zugrunde, ein Werkzeug zum Erzeugen eines Innengewindes in Beton, Mauerwerk, Gestein oder dgl. anzugeben, bei dem ein zuverlässiges Erzeugen eines Innengewindes in Beton, Gestein oder Mauerwerk ohne die Gefahr des Ausbrechens des Innengewindes bei der Erzeugung ermöglicht ist.

Zur Lösung dieser Aufgabe dient Patentanspruch 1.

Das Werkzeug ist prinzipiell wie ein Gewindebohrer ausgebildet, wobei jedoch die Abmessungen bezüglich der Gewindeausbildung unterschiedlich und so beschaffen sind, daß sie im Zusammenwirken mit den erfindungsgemäß vorgesehenen Schneidezähnen, die bei üblichen Gewindebohrern nicht vorhanden sind, ein zuverlässiges Gewindeschneiden in Beton, Gestein oder Mauerwerk ermöglichen, ohne daß die Gefahr des Ausbrechens des geschnittenen Gewindes bei der Erzeugung und/oder beim nachfolgenden direkten Einschrauben einer entsprechend gestalteten Schraube in das Gewindeloch besteht.

Bei dem Werkzeug nach der Erfindung ist während des Erzeugens eines Gewindes in einem vorgebohrten Loch im Beton, Gestein oder Mauerwerk aufgrund der gewählten Steigung nur wenig Gewinde im Eingriff, so daß das Eindrehmoment nicht zu groß wird.

Der Abstand zwischen zwei Windungen des Gewindes ist ausreichend groß, um der Eigenschaft des Betons, in wesentlichen Druckkräfte und nur kleine Zugkräfte übertragen zu können, Rechnung zu tragen und außerdem die Abfuhr vom beim Herausarbeiten des Gewindes erzeugten Gesteinsmehl zu erleichtern.

Aus der EP 89 123 699.4 ist eine gewindeformende Schraube bekannt, bei welcher der Gewindegrat bugförmige Schneidezähne aufweist, wie sie in Anspruch 6 unter Schutz gestellt sind. Diese bekannte Schraube ist als "Holzschraube" zum Einschrauben in Holz- oder Spanplattenmaterial konzipiert. Überraschend führt die Anwendung solcher Schneidezähne auch bei dem Werkzeug nach der Erfindung zu einem wesentlich leichteren Schneiden von Gewinde in dem spröden, leicht ausbrechenden Beton- oder Gesteinsmaterial.

Eine zum direkten Einschrauben in das mit einem Werkzeug nach der Erfindung erzeugte Gewinde geeignete Schraube muß ein entsprechend "positives" Außengewinde haben. Eine solche Schraube ist in Anspruch 11 unter Schutz gestellt, wobei jedoch Schneidezähne entbehrlich sind, wie in Fig. 12 angegeben.

Die Erfindung ist im folgenden anhand schematischer Zeichnungen an Ausführungsbeispielen mit weiteren Einzelheiten näher erläutert. Es zeigen

Fig. 1 eine Seitenansicht eines Werkzeuges gemäß der Erfindung über ein in Beton, Gestein oder Mauerwerk vorgebohrten Loch;

Fig. 2 einen vergrößerten Ausschnitt des Führungsteiles des Werkzeuges nach Fig. 1;

Fig. 2a einen Schnitt nach der Linie II-II in Fig. 2;

Fig. 3 eine Teilansicht in Richtung des Pfeiles B in Fig. 4;

Fig. 4 einen Teilschnitt in einer Ebene enthaltend den Gewindegrat eine Teilbereichs des Gewindes des Werkzeugs nach der Erfindung;

Fig. 5 eine Teilansicht in Richtung des Pfeiles C in Fig. 4 in abgewickelter Darstellung;

Fig. 6 einen Teilschnitt in einer Ebene enthaltend den Gewindegrat eines Teilbereiches des Gewindes eines abgewandelten Werkzeuges gemäß der Erfindung und

Fig. 7 eine Ansicht in Richtung des Pfeiles D in Fig. 6 in abgewickelter Darstellung.

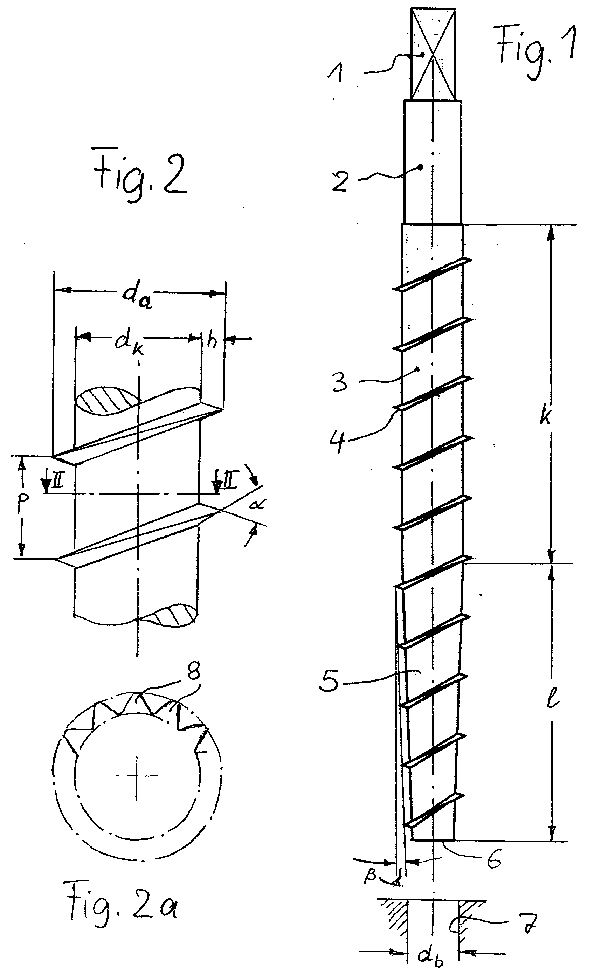

Das in den Fig. 1 und 2 gezeigte Werkzeug hat einen im Querschnitt vier- oder mehrkantigen Einspannteil 1, mit dem das Werkzeug in ein Bohrgerät eingespannt werden kann, einen daran anschließenden glatten Schaftteil 2 von Kreisquerschnitt, einen daran anschließenden, mit Gewinde 4 versehenen Führungsteil (3) und einen Gewindanschnitteil 5, der schwach konisch mit einem Konuswinkel $\beta$ zwischen 1,5 und 3°, vorzugweise etwa 2°, ausgeführt ist und auf dem das Gewinde 4 bis zur Stirnfläche 6 des Werkzeuges sich fortsetzt.

Bei dem gezeigten Werkzeug verhält sich die Länge 1 des Gewindeanschnitteils 5 zur Länge k des Führungsteiles 3 etwa 4:5. Dies ergibt sich aus dem kleinen bevorzugten Konuswinkel $\beta$ = 2° des Gewindeanschnitteiles 5. Es ist wichtig, daß das Gewinde 4 an der der Bohrung 7 im Beton zugewandten Oberfläche 6 des Werkzeuges unmittelbar ansetzt, damit der Gewindeschneidprozeß sofort beim Einsenken des Werkzeuges in die Bohrung 7 beginnen kann.

Aus den Fig. 2 und 2a werden weitere Einzelheiten des Gewindes 4 im Führungsteil 3 deutlich. So beträgt der Flankenwinkel $\alpha$ des Gewindes vorzugsweise zwischen 35° und 50°.

Im folgenden bedeuten:

$d_a$ - Außendurchmesser, gemessen über den Gewindegrat 15;

$d_k$ - Kerndurchmesser des Schaftes 12;

$d_b$ - Bohrungsdurchmesser der vorgebohrten Bohrung 10;

p - Steigung zwischen zwei Windungen der Schraube;

$\alpha$ - Flankenwinkel des Gewindes.

Die genannten Abmessungen stehen in den folgenden Beziehungen (1), (2) und (3) zueinander:

$$1 \geq \frac{p}{d_b} \geq 0,6; \qquad (1)$$

$$1 \geq \frac{d_k}{d_b} \geq 1 - \frac{0,5}{d_b} \qquad (2)$$

$$d_a = -0,0277\, d_b^2 + 1,491\, d_b - 0,447. \qquad (3)$$

Der Schnitt nach Fig. 2a zeigt die Ausgestaltung des Gewindes 4 mit Schneidezähnen 8. Diese Schneidezähne 8 sind "negativ" bezüglich der Schneidrichtung angestellt und erstrecken sich etwa über die Gewindehöhe h des Gewindes 4. Die Schneidezähne 8 könnten durch achsparallele Profilnutung des Gwindes 4 erzeugt werden.

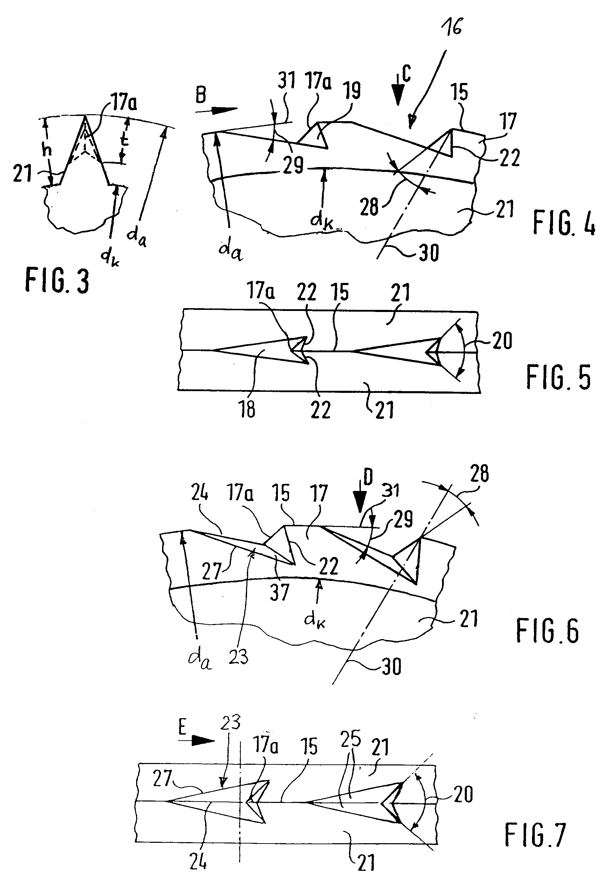

Bei bevorzugten Ausführungen gemäß den Fig. 3 bis 7 ist der Gewindegrat 15 in Abständen durch Ausnehmungen 16 unterbrochen, derart, daß die stehenbleibenden Gratabschnitte Schneidezähne 17 mit in Einschraubrichtung der Schraube weisender Schneidkante 17a bilden. Die Teilung für die Schneidezähne ist dabei beispielsweise so vorgenommen, daß je nach Durchmesser sechs bis dreißig Zähne pro Windung entstehen. Wie am besten aus den Figuren 3, 4 und 5 ersichtlich ist, sind die den Gewindegrat 15 unterbrechenden Ausnehmungen 16 so ausgebildet, daß sich am Grund der Ausnehmung eine ebene Fläche 18 bildet. Die die Schneidekante 17a bildenden Schneidflanken 19 schneiden in einem Winkel 20 von vorzugsweise 75 bis 100 Grad die Gewindeflankenflächen 21, und zwar an Kanten 22.

Die Figuren 6 und 7 zeigen eine Abwandlung, die sich von der eben beschriebenen Ausführungsform lediglich bezüglich der Ausbildung des Grundes der Ausnehmungen 16 unterscheidet. Bei der Abwandlung ist nämlich die den Grund der Ausnehmungen 16 darstellende Fläche nicht als ebene Fläche 18 sondern als Keil 23 ausgebildet, wobei die Keilkante 24 in den Gewindegrat 15 übergeht. Die Keilflächen 25 des Keils 23 bilden einen Winkel von vorzugsweise 60 bis 100 Grad und schneiden die Gewindeflankenflächen 21 in den Kanten 27. Dies bewirkt, daß beim Einschrauben des Werkzeugs das durch die Schneidkanten 17a gelöste Material leichter über die geneigten Flächen 25 zum Gewindegrund abgeführt werden kann.

Die Tiefe der die Schneidezähne 17 bildenden Ausnehmungen 16 liegt vorzugsweise zwischen 5/7 und 7/7 der Gewindehöhe des Gewindes 14. Die Schneidkante 17a ist zweckmäßigerweise in einem bezüglich der radialen Richtung negativen Winkel 28 zwischen 25° und 35° zum Schraubenradius 30 anzustellen. Die Fläche 18 bzw. die Keilkante 24 weist vorzugsweise einen Winkel 29 zur Tangente 31 von 20 bis 30 Grad auf. Alle Übergänge der die Gewindeflankenflächen schneidenden Flächen sind so auszubilden, daß keine scharfen Kanten entstehen, die den Materialfluß beeinträchtigen würden.

Ein Werkzeug nach der Erfindung soll auch nach vielfachem Gebrauch noch einsatzfähig sein, d.h. eine hohe Lebensdauer aufweisen. Hierzu wird der Werkstoff des Werkzeuges vorzugsweise so ausgewählt, daß er eine Gebrauchshärte größer als 55 HRC auf der Rockwell-Härteskala aufweist. Beispielsweise kann als Werkstoff ein legierter Stahl, Werkzeugstahl, Stellit, ein Keramik-Werkstoff oder ein Hartmetall eingesetzt werden.

Beim Eindrehen des Werkzeuges in ein im Beton vorgebohrtes Loch werden die keilförmigen Zähne des Gewindes 4 mit hohem Druck in den Beton eingepreßt. Dabei ergeben sich durch die Keilwirkung der Zähne örtlich Überbeanspruchungen im Beton, welche die Bildung von Bruchschrammen und schließlich das Absplittern des Betons zur Folge haben. Durch diesen Trennmechanismus wird schließlich das angestrebte Innengewinde im Beton ausgeformt.

In das so erzeugte Innengewinde kann dann direkt eine entsprechend ausgebildete Schraube eingeschraubt werden, die auch ohne Vermittlung eines Dübels eine gute Halterung von an dem Beton oder Mauerwerk zu haltenden Teilen ergibt.

EP 0 625 400 A1

**Patentansprüche**

1. Werkzeug zum Erzeugen eines Innengewindes in Beton, Mauerwerk oder dgl. mit einen Einspannteil (1), einem Schaftteil (2), einem Führungsteil (3), der konstanten Durchmesser hat und ein Gewinde (4) aufweist, sowie einem schwach konisch ausgebildeten Gewindeanschnittteil (5), der den Gewindeanschnitt des Gewindes (4) trägt, wobei das Verhältnis von Außendurchmesser ($d_a$) zu Kerndurchmesseer ($d_K$) des Gewindes (4) im Führungsteil etwa 1,25 - 1,5 beträgt, wobei das Verhältnis von Außendurchmesser ($d_a$) zur Steigung (p) des Gewindes (4) ) im Führungsteil (3) etwa 1,5 - 1,6 beträgt, und wobei das Gewinde (4) im Führungsteil (3) sowie über die ganz Länge des Gewindeanschnittes (5) Schneidezähne (8) aufweist.

2. Werkzeug nach Anspruch 1, dadurch **gekennzeichnet**, daß der Flankenwinkel ($\alpha$) des Gewindes (4) kleiner als 50° und größer oder gleich 35° ist.

3. Werkzeug nach Anspruch 2 oder 3, dadurch **gekennzeichnet**, daß sich die Steigung (p) des Gewindes (4) in Bezug auf den Bohrungsdurchmesser ($d_b$) einer zur Aufnahme des Werkzeugs vorgebohrten Bohrung (10) wie folgt verhält:

$$1 \quad \geq \quad \underline{p} \quad \geq \quad 0,6$$
$$d_b.$$

4. Werkzeug nach einem der Ansprüche 1 bis 3, dadurch **gekennzeichnet**, daß sich der Kerndurchmesser ($d_K$) im Führungsteil (3) in Bezug auf den Bohrungsdurchmesser ($d_b$) wie folgt verhält:

$$1 \quad \geq \quad \underline{d_k} \quad \geq 1 - \underline{0,5}$$
$$d_b$$

5. Werkzeug nach einem der Ansprüche 1 bis 4, dadurch **gekennzeichnet**, daß sich der Außendurchmesser ($d_a$) des Führungsteils (5) in Bezug auf den Bohrungsdurchmesser ($d_b$) wie folgt verhält:

$$d_a = 0,0277 \ d_{b^2} + 1,491 \ d_b - 0,447.$$

6. Werkzeug nach einem der Ansprüche 1 bis 5, dadurch **gekennzeichnet**, daß der Gewindegrat (15) des Gewindes (4) in Abständen durch Ausnehmungen (16) unterbrochen ist, daß die zwischen den Ausnehmungen (16) stehenbleibenden Gratabschnitte keilförmige Schneidezähne (17) bilden, und daß die in der gleichen Ebene wie der Gewindegrat verlaufenden Schneidkanten (17a) der Schneidezähne (17) in Einschraubrichtung des Gewindes (4) weisen und unter einem negativen Winkel (28) bezüglich der radialen Richtung (30) angestellt sind.

7. Werkzeug nach Anspruch 6, dadurch **gekennzeichnet**, daß je Windung des Gewindes (4) sechs bis dreißig Schneidezähne (17) vorgesehen sind.

8. Werkzeug nach Anspruch 6 oder 7, dadurch **gekennzeichnet**, daß die die Schneidzähne (17) bildenen Ausnehmungen (16) eine Tiefe (t) aufweisen, welche 5/7 bis 7/7 der Gewindehöhe (h) entspricht.

9. Werkzeug nach einem der Ansprüche 6 bis 8, dadurch **gekennzeichnet**, daß der negative Anstellwinkel (28) der Schneidkanten (17a) der Schneidezähne (17) 25° bis 35° beträgt.

4

**10.** Werkzeug nach einem der Ansprüche 1 bis 9, dadurch **gekennzeichnet**, daß der halbe Konuswinkel (β) des Gewindeanschnitteils zwischen 1° und 10°, vorzugsweise zwischen 1,5° und 3°, insbesondere bei etwa 2°, liegt.

**11.** Schraube, die mit einem Gewinde zum direkten Einschrauben in einem mit dem Werkzeug nach einem der Ansprüche 1 bis 10 erzeugten Gewindeloch gestaltet ist.

**12.** Schraube nach Anspruch 11, dadurch **gekennzeichnet**, daß ihr Gewinde entsprechend dem Gewinde (4) des Werkzeugs im Führungsteil (3), jedoch ohne Schneidezähne ausgebildet ist.

Fig. 1

Fig. 2

Fig. 2a

FIG. 3

FIG. 4

FIG. 5

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,A | EP-A-0 433 484 (LUDWIGHETTICH SCHRAUBENFABRIK GMBH & CO) * das ganze Dokument * --- | 1-10 | B23G5/06 |
| A | DE-A-42 06 440 (REISSER-SCHRAUBENFABRIK GMBH + CO) * Zusammenfassung; Abbildungen * --- | 1,6 | |
| A | DE-C-520 607 (ALLGEMEINE ELEKTRICITÄTS-GESELLSCHAFT) * das ganze Dokument * ----- | 1 | |

| RECHERCHIERTE SACHGEBIETE (Int.Cl.5) |
|---|
| B23G F16B B28D |

Der vorliegende Recherchenbericht wurde für alle Patentansprüche erstellt

| Recherchenort | Abschlußdatum der Recherche | Prüfer |
|---|---|---|
| DEN HAAG | 6. September 1994 | Areso y Salinas, J |